Europäisches Patentamt

(19) European Patent Office

Office européen des brevets

(11) Veröffentlichungsnummer: **0 307 944**

**A1**

(12) **EUROPÄISCHE PATENTANMELDUNG**

(21) Anmeldenummer: 88115227.6

(22) Anmeldetag: 16.09.88

(51) Int. Cl.⁴: **C02F 1/56 , C02F 1/58**

(30) Priorität: 18.09.87 DE 3731513

(43) Veröffentlichungstag der Anmeldung:
22.03.89 Patentblatt 89/12

(84) Benannte Vertragsstaaten:
AT BE CH DE ES FR GB GR IT LI LU NL SE

(71) Anmelder: **G.A. Pfleiderer**
**Unternehmensverwaltung GmbH & Co. KG**
**Ingolstädter Strasse 51 Postfach 1480**
**D-8430 Neumarkt/Opf.(DE)**

(72) Erfinder: **Haars, Annegret, Dr.,**
**Am schuhhof 3**
**D-3380 Goslar(DE)**
Erfinder: **Hüttermann, Aloys, Prof. Dr.,**
**Büsgenweg 3**
**D-3400 Göttingen(DE)**
Erfinder: **Milstein, Oleg, Dr.,**
**Büsgenweg 3**
**D-3400 Göttingen(DE)**
Erfinder: **Zanker, Helmut, Dr.,**
**Dr.-Schrauthstrasse 15**
**D-8430 Neumarkt/Opf.(DE)**

(74) Vertreter: **Harders, Gerhard, Dr.**
**Stettiner Strasse 2**
**D-6367 Karben 6(DE)**

(54) **Verfahren zur Reinigung von Abwässern.**

(57) Ein Verfahren und eine Vorrichtung zur Fällung von anionischen Verunreinigungen aus Abwässern unter Verwendung von synthetischen kationischen Polymeren. Die Abwässer werden, nach Einstellung auf einen pH-Wert von 2,5 bis 8,5, vorzugsweise 4,0 bis 4,5, bei einer Behandlungstemperatur von zweckmäßig 50 bis 60° C, in einem Reaktor (15) zunächst teilweise mit synthetischen kationischen Polymeren, insbesondere Polyimin, aus einem Vorratsbehälter (17) behandelt. Dem so behandelten Abwasser werden anschließend native, hydrolysierte oder kationisch substituierte Produkte von Stärken oder Hemicellulosen zur Vervollständigung der Fällung der anionischen Verunreinigungen zugesetzt. Die Zugabe der pH-Reagenzien und der Fällungsmittel erfolgt vollautomatisch. Anwendung finden das Verfahren und die Vorrichtung vor allem bei der Reinigung von Abwässern der Zellstoff- und Papierindustrie.

FIG. 1

## Verfahren zur Reinigung von Abwässern

Die vorliegende Erfindung betrifft ein Verfahren zur Reinigung von Abwässern, die anionische Verunreinigungen enthalten, unter Verwendung von synthetischenkat kationischen Polymeren. Die Erfindung betrifft weiterhin eine Vorrichtung zur Durchführung des Verfahrens sowie dessen Anwendung zur Reinigung von Abwässern der Zellstoff- und Papierindustrie.

Die EP-PS 0881 322 beschreibt die Herstellung einer hydrolysierten Stärke, die zur Ausflockung von Metalloxiden oder -hydroxiden bei der Erzaufbereitung oder bei der Aufbereitung von Kohle- und Teersänden verwendbar ist. Versuche haben ergeben, daß beispielsweise Ligninsulfonate oder Chlorlignine bzw. Chloraromaten mit solchen Stärkehydrolysaten nicht ausflockbar sind.

Die Fällung von Ligninsulfonaten aus Abwässern der Zellstoffindustrie mit Polyiminen ist in der EP-PS 00 49 831 beschrieben. Polyimine sind aber im Vergleich zu anderen bekannten Flockungsmitteln, wie z. B. Polyacrylamiden oder Bentoniten, relativ teure Stoffe.

Aufgabe der vorliegenden Erfindung ist es, ein Verfahren zur Reinigung von Abwässern, die anionische Verunreinigungen enthalten, zu schaffen, in welchem die Einsatzmenge der bisher verwendeten synthetischen kationischen Polymeren dadurch reduziert werden kann, daß sie durch billigere, einfach zugänglichere und biologisch leichter abbaubare Stoffe ersetzt werden.

Gelöst wird diese Aufgabe dadurch, daß die Abwässer zunächst teilweise mit synthetischen kationischen Polymeren behandelt werden und dem so behandelten Abwasser anschließend native, hydrolysierte oder kationisch substituierte Produkte der folgenden Folgenden Stoffe zugesetzt werden: Stärken, Cellulosen, Hemicellulosen oder andere Kohlehydrate.

Das erfindungsgemäße Verfahren eignet sich zur Behandlung von Abwässern, die organische anionische Polymere enthalten, z. B. halogenierte, insbesondere chlorierte, bzw. sulfonierte organische Verbindungen, beispielsweise Abwässer der Zellstoff- und Papierindustrie, wie sie bei der Zellstoffkochung oder in den Bleichereiabwässern bei der Zellstoffgewinnung anfallen; carboxylgruppenhaltige polymere Verbindungen, beispielsweise Abwässer aus der Milch- und Fleischwirtschaft; enolische OH-Gruppen enthaltende polymere Verbindungen, u. a. Phenole, beispielsweise Abwässer aus der Farbstoffindustrie; oder andere anorganische Anionen enthaltende polymere Verbindungen, beispielsweise Phosphat- oder Nitrat-haltige polymere Verbindungen. Bei der Behandlung dieser Abwässer können neben den anionischen polymeren Verbindungen auch monomere anionische oder andere Verbindungen mitgefällt werden.

Die Abwässer können so, wie sie anfallen, behandelt werden, sie können aber auch konzentriert oder verdünnt werden. Vor der Behandlung werden die Abwässer zweckmäßigerweise auf einen pH-Wert von etwa 2,5 bis etwa 8,5 eingestellt, vorzugsweise auf einen pH-Wert von etwa 3,5 bis etwa 5,5. Die bestehen Ergebnisse werden bei pH-Werten von etwa 4,0 bis etwa 4,5 erhalten.

Die erfindungsgemäße Abwasserbehandlung läßt sich bei allen Temperaturen zwischen Umgebungstemperatur und dem Siedepunkt des Abwassers, d.h. etwa 100° C, durchführen. Bei höheren Temperaturen wird die Reaktion beschleunigt, deshalb sind Temperaturen von etwa 30° bis 80° C bevorzugt. Bei Temperaturen von etwa 50 bis 60° C wird jedoch bereits eine gute Umsetzung erzielt.

Unter der Bezeichnung synthetische kationische Polymere werden alle nicht nativen synthetischen Polymeren zusammengefaßt, deren Ketten synthetisch durch Polymerisation von ungesättigten Monomeren oder synthetischen Vorpolymerisaten entstanden sind, und in die dann kationische Gruppen eingeführt wurden, wie z. B. Polyimine, Polyamine, Polyamidine, Polyacrylamide und dergl. Bevorzugt werden Polyimine verwendet.

Als Polyimine eignen sich alle bekannten handelsüblichen Polyimine, sowohl solche mit niedrigen als auch mit hohen Molekulargewichten. Die Unterschiede in der Flockungswirkung von Polyiminen mit unterschiedlichen Molekulargewichten sind nicht mehr ausgeprägt. In manchen Fällen haben Polyimine mit niedrigeren Molekulargewichten eine etwas bessere Flockungswirkung als Polyimine mit hohen Molekulargewichten.

Als Stärkekomponente eignen sich native Stärken, wie beispielsweise Weizenstärke, Maisstärke, Reisstärke, Kartoffelstärke, Tapioka und dergleichen. Auch Stärkehydrolysate, d. h. also teilweise abgebaute Stärkeprodukte, sind im erfindungsgemäßen Verfahren einsetzbar. Durch Hydrolyse erhaltene Abbauprodukte von Stärken, die mehr als vier Glucoseeinheiten enthalten, sind im erfindungsgemäßen Verfahren einsetzbar. Bevorzugt werden Stärkehydrolysate verwendet, die aus mehr als 200 Glucoseeinheiten bestehen.

Es wurde gefunden, daß z. B. native Stärken mit Polykationen, wie Polyiminen, einen besonders guten Flockungseffekt ergeben. Dies ist überraschend, da native Stärken allein ohne Zusatz von Polyiminen überhaupt keine Flockung ergeben. Beim Einsatz von Stärkehydrolysaten zeigen wenig hydrolysierte Stärkeprodukte, d. h., Stärkeprodukte mit einer hohen Anzahl an Glucoseeinheiten, bessere Ergebnisse als stark hydrolysierte Stärkeprodukte.

Beim Einsatz kationisch substituierter Stärkeprodukte, wie sie beispielsweise in der US-PS 29 95 513 beschrieben sind, zeigen schwach substituierte Stärkeprodukte in Verbindung mit synthetischen Polykationen bessere Ergebnisse als höher substituierte Stärkeprodukte. Wird beispielsweise im erfindungsgemäßen Verfahren eine kationisch substituierte Stärke mit dem Substitutionsgrad 0,18 in Verbindung mit synthetischen Polykationen eingesetzt, so läßt sich bei Verwendung von Polyiminen als Polykationen in Chlorbleichlaugen enthaltenes Chlorlignin, gemessen durch die UV-Absorption bei 280 nm, im Gehalt um 49 % vermindern. Wird der Substitutionsgrad der kationisch substituierten Stärke auf 0,045, also auf ein Viertel des vorigen Wertes, vermindert, so wird die Ausflockung des Chlorlignins auf 68 % verbessert (s. Tabelle 2). Auch dieses Ergebnis ist überraschend, da nicht substituierte Stärkeprodukte allein überhaupt keine Ausflockung ergeben.

Als Hemicellulosen dienen alle überwiegend hemicellulosehaltigen Produkte, wie sie in vielen Pflanzen verkommen bzw. aus ihnen gewonnen werden können. Auch sie können in nativer, hydrolysierter oder kationisch substituierter Form eingesetzt werden. Es ist auch möglich, Gemische der genannten Stoffe einzusetzen, beispielsweise aus Stärke und Hemicellulose.

Das erfindungsgemäße Verfahren wird in der Weise durchgeführt, daß die Abwässer zunächst in ähnlicher Weise, wie es z. B. in der EP-PS 00 49 831 beschrieben ist, mit polykationischen Verbindungen, z. B. mit Polyiminen, behandelt werden. Abweichend von diesem Stand der Technik wird dabei die Menge des eingesetzten Polykations soweit reduziert, daß keine vollständige Ausflockung der Ligninsulfonate bzw. der Chlorverbindungen bewirkt wird. Z. B. kann die Ausfällung der Ligninsulfonate bzw. der Chlorverbindungen, die durch entsprechende Analysenverfahren, wie kolorimetrische Messungen, kontrolliert werden kann, bereits abgebrochen werden, wenn etwa die Hälfte bis ein Drittel der vorhandenen auszuflockenden Substanzen entfernt worden ist. Danach wird dann die Stärke bzw. das modifizierte Stärkeprodukt in die Reaktionsmischung eingegeben.

Die Fällungsrate wird nach bekannten Methoden ermittelt, beispielsweise durch Messung der optischen Absorption im UV- oder sichtbaren Bereich, der Leitfähigkeit, der Trübung, der Teilchengröße oder des Zeta-Potentials, oder andere Meßmethoden, mit denen sich die Effektivität der Fällung bestimmen läßt.

In einer bevorzugten Ausführungsform der vorliegenden Erfindung wird die Einstellung des pH-Wertes und der Zusatz an Fällungsmittel durch einen Prozeßrechner und in einem mit dem Fällungsreaktor verbundenen Nebenkreislauf oder direkt im Reaktionsgefäß ein Parameter gemessen, der der Effektivität der Fällung proportional ist, beispielsweise die oben genannten Meßmethoden. Dabei werden bevorzugt Meßmethoden verwendet, mit denen sich die Effektivität der Fällung in der Reaktionsmischung direkt bestimmen läßt, z. B. durch Messung der optischen Dichte. Der erzeugte Niederschlag kann aber auch abgetrennt werden, z. B. durch Zentrifugation in einem Nebenkreislauf. Da bei der Fällung mit Polyiminen bei der Anwendung eines Überschusses an Fällungsmittel Fällungsprobleme auftreten können, kommt der Gedanke eines rechnergesteuerten Verfahrensablaufs bei einem solchen hochsensiblen Verfahren besonders vorteilhaft zur Anwendung. Auf diese Weise wird überraschenderweise eine Regelung des Zusatzes an Fällungsmittel ermöglicht. Eine Absorptionsmessung geht beispielsweise von einem Absorptionsmaximum der Ligninderivate bei 280 nm aus. Mit steigender Fällungsrate sinkt somit die UV-Absorption des Überstandes, wie in den Beispielen näher gezeigt ist. Gehen diese Meßwerte in einen Rechner ein, so läßt sich das Verfahren in einwandfreier und optimaler Weise steuern.

Weitere Möglichkeiten der Rechnersteuerung bestehen in den oben genannten optischen, elektrischen und anderen Messungen.

Es liegt im Rahmen der Erfindung, auch den Zufluß der Abwässer in den Fällungsreaktor und den Ablauf aus diesem nach erfolgter Ausfällung in eine Absetzgefäß durch den Rechner zu steuern.

Unmittelbar nach dem Beginn des Zusatzes des Fällungsmittels zum Abwasser setzt die Sedimentbildung ein. Es hat sich überraschenderweise gezeigt, daß das Sediment bereits nach kurzer Zeit, beispielsweise nach etwa 10 bis 20 Minuten, in gut fällbarer Form vorliegt. Der Fällungsvorgang erfordert demnach nur eine gewisse kurze "Reifezeit", in welcher sich die positiv und negativ geladenen Makromoleküle aneinanderlagern und damit den Niederschlag bilden. Von besonderer Bedeutung ist der Gedanke, das Abwasser mit dem Fällungsmittel eine kurze Zeitspanne von ca. 15 Minuten in dem Reaktor zu belassen, für die anschließende Messung des Absorptionsgrades. Erst wenn das Sediment in gut fällbarer Form vorliegt, läßt sich die Effektivität des Verfahrens quantitativ gut bestimmen.

Beim erfindungsgemäßen Verfahren kommt es entscheidend darauf an, daß die beiden Flockungsreaktionen, zum einen mit dem synthetischen kationischen Polymeren, zum anderen mit den Kohlehydratprodukten, nacheinander durchgeführt werden. Wird hingegen ein einfaches Gemisch der beiden Fällungsmittel eingesetzt und mit diesem Gemisch eine einmalige simultane Fällung durchgeführt, so entspricht das Ergebnis der aus dem Stand der Technik bekannten wesentlich schlechteren Fällung mit synthetischen kationischen Polymeren allein (s. Tab. 1, Spalte: Kontrolle, Fällung mit Polyiminen allein). Durch gemeinsame Fällung mit synthetischen kationischen Polymeren und Kohlenhydratprodukten läßt sich also das erfindungsgemäße Ergebnis nicht erzielen, vielmehr wird nur durch sukzessive Fällung zunächst mit synthetischem kationischem Polymer und anschließend mit Kohlehydratprodukt das erfindungsgemäße verbesserte Ergebnis erhalten.

Die Erfindung befaßt sich darüber hinaus mit einer Vorrichtung zur Durchführung des beanspruchten Verfahrens, wobei wenigstens ein Reaktor Verwendung findet. Dieser Reaktor ist erfindungsgemäß mit einem pH-Meter und einem Nebenkreislauf verbunden, der eine Vorrichtung enthält, die einen Parameter mißt, der sich proportional zur Effektivität der Fällung verhält, z. B. einem UV-Absorptionsmeßgerät. Beide Meßgeräte sind mit einem Rechner gekoppelt, der seinerseits mit Absperrorganen in den Zuführleitungen für die pH-Reagenzien und das Fällungsmittel sowie in der Verbindungsleitung mit dem Reaktor und einem Absetzgefäß gekoppelt ist. Bei dieser Vorrichtung gehen die Meßwerte der beiden Meßgeräte als Signale in den Prozeßrechner ein und werden dort beispielsweise mit vorprogrammierten Erfahrungswerten verglichen. Den Ausgang des Rechners bilden dann Impulse zur Beeinflussung von Absperrorganen, wie Ventilen, Pumpen oder dergleichen in den verschiedenen Zuleitungen.

Als besonders vorteilhaft hat es sich erwiesen, zwei thermostatisierte Reaktoren hintereinander anzuordnen, von denen einer der pH-Wert- und Temperatureinstellung und der andere der Fällungsreaktion dient. Beide hintereinandergeschalteten Reaktoren arbeiten im Takt miteinander.

Weitere Merkmale, Einzelheiten und Vorteile der Erfindung ergeben sich aus der folgenden Beschreibung sowie der Zeichnung. Hierbei zeigen:

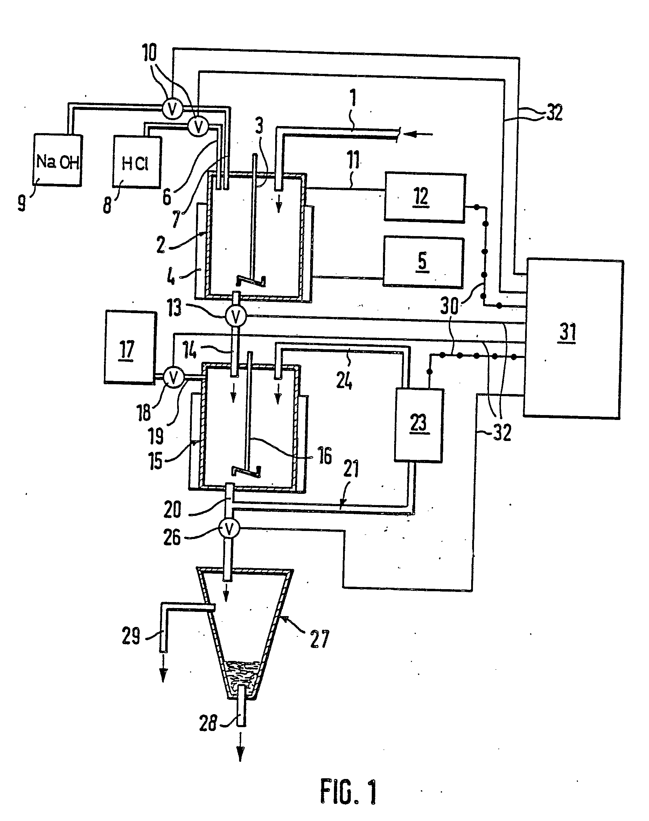

Fig. 1 eine bevorzugte Ausführungsform in Gestalt eines Fluß- und Regelschemas und

Fig. 2 ein Diagramm über das Ergebnis der UV-Absorption im Verhältnis zur Dosierungszeit bei konstanter Dosierung des Fällungsmittels.

Das zu behandelnde Abwasser wird durch die Zuleitung 1 in einen Reaktor 2 eingeführt, der mit einem Rührwerk 3 versehen ist. Die Reaktoren 2 und 15 sind mit einer Heizeinrichtung 4 versehen, die unter Zuhilfenahme eines Thermostaten 5 den Reaktorinhalt auf einen gewünschten Temperaturwert einstellt und konstant erhält. In den Reaktor 2 münden die Zuleitungen 6 und 7, von denen die erstere mit einem Vorratsgefäß 8 für eine Säure, die letztere mit einem Vorratsgefäß 9 für eine Lauge verbunden ist. Beide Leitungen 6 und 7 sind mit je einem Ventil 10 versehen.Selbstverständlich können an deren Stelle, gegebenenfalls auch zusätzlich, entsprechende Fördereinrichtungen, wie Pumpen od.dgl. vorgesehen sein. Weiter ist der Reaktor 2 über die Sondenleitung 11 mit einem pH-Meter 12 verbunden, der die entsprechenden Werte der im Reaktor 2 befindlichen Flüssigkeit ermittelt.

Der Bodenauslauf des Reaktors 2 ist über eine mit einem Absperrventil 13 versehene Leitung 14 mit einem weiteren Reaktor 15 verbunden, der seinerseits wieder ein Rührwerk 16 enthält. In diesen Reaktor 15 mündet eine mit dem Behälter 17 verbundene und mit einem Absperrventil 18 versehene Leitung 19. Dieser Vorratsbehälter 17 dient zur Aufnahme eines Fällungsmittels. Von der Abflußleitung 20 des Reaktors 15 zweigt ein Nebenkreislauf 21 ab, in dem ein Meßgerät 23 zur Messung der Effektivität der Fällung angeordnet ist. Mit der Leitung 24 mündet dieser Nebenkreislauf 21 wieder in den Reaktor 15 ein. mit der Leitung 24 mündet dieser Nebenkreislauf 21 wieder in den Reaktor 15 ein.

Die Abflußleitung 20 ist mit einem Absperrventil 26 versehen, und sie mündet in einen Absetzbehälter 27, in welchem sich das Sediment am Boden absetzt, von wo es durch die Öffnung 28 entnommen wird, während der Überstand dekantiert und durch die Leitung 29 entnommen wird.

Das pH-Meter 12 und das Meßgerät 23 sind über Leitungen 30 mit einem Prozeßrechner 31 gekoppelt, der die ermittelten Meßwerte registriert und gegebenenfalls mit vorprogrammierten Vergleichswerten vergleicht. Die Ausgänge 32 dieses Rechners 31 sind mit den Absperrventilen 10, 13, 18, 26 verbunden und dienen der Übermittlung entsprechender Regelimpulse.

Das Verfahren läuft etwa wie folgt ab:

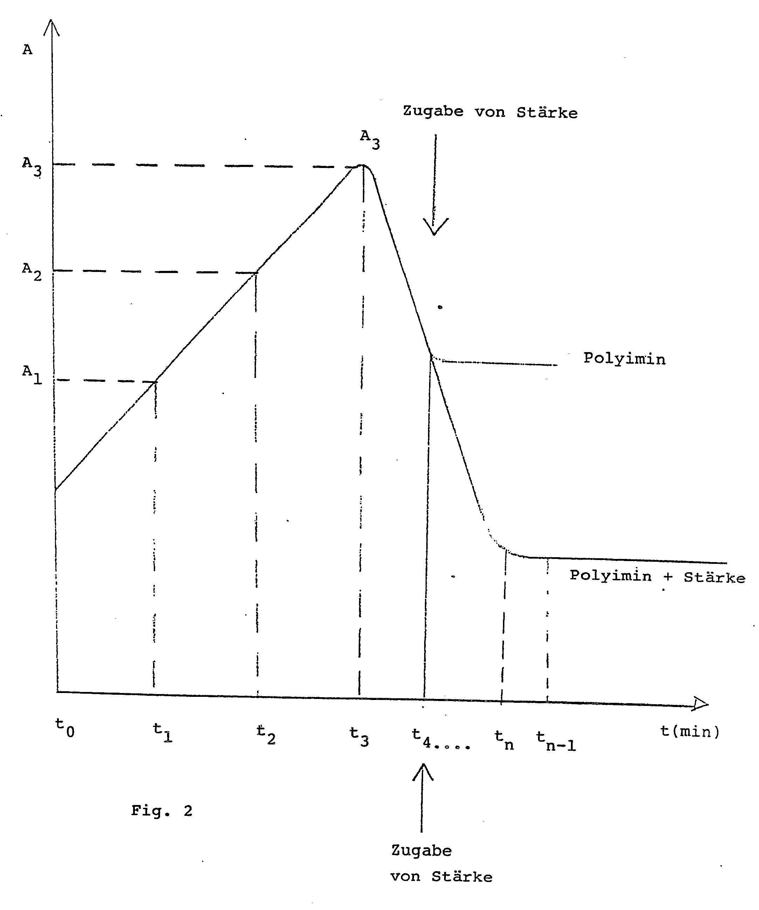

Die Ablauge wird durch die Leitung 1 in den Reaktor 2 eingeführt und dort unter ständigem Rühren auf die gewünschte Verfahrenstemperatur erwärmt. Zugleich mißt das pH-Meter 12 den pH-Wert des Reaktorinhalts und gibt diesen Wert in den Rechner 31 ein. Dieser vergleicht den Ist-Wert mit dem vorgegebenen Soll-Wert und gibt bei vorhandener Differenz einen entsprechenden Impuls an eines der Ventile 10, bei deren Öffnen eine aus entsprechenden Erfahrungswerten zuvor errechnete und vorprogrammierte Menge an Säure oder Lauge aus den Vorratsbehältern 8 oder 9 entnommen und in den Reaktor 2 eingeführt wird. Dieser Vorgang wiederholt sich mit im allgemeinen jeweils geringer werdender zuzusetzender Menge solange, bis Ist-Wert und Soll-wert des pH-Wertes übereinstimmen. Dieser Zustand löst im Rechner 31 ein weiteres Signal an das Ventil 13 aus, welches öffnet und den Inhalt aus dem Reaktor 2 in den nachfolgenden Reaktor 15 strömen läßt. Auch hier wird der Reaktorinhalt durch ein Rührwerk 16 ständig in Bewegung gehalten. Da der Nebenkreislauf 21 mit dem Inneren des Reaktors 15 in Verbindung steht, gelangt die Flüssigkeit das Meßgerät 23, welches die Effektivität der Fällung mißt. Dieser Meßwert At 0 wird in den Rechner eingegeben und dort mit einem vorgegebenen und vorprogrammierten Erfahrungswert verglichen. Dies löst ein Signal an das Ventil 18 aus, welches öffnet und das Fällungsmittel aus dem Vorratsbehälter 17 in den Reaktor 15 einströmen läßt. Nach einer Verweilzeit von einigen Minuten wird erneut die Effektivität der Fällung gemessen, dieser Meßwert At 1 geht in den Rechner 31 ein und veranlaßt dort ein weiteres Signal an das Ventil 18 in der Zuleitung 19 des Fällungsmittels, von dem nun eine wesentlich geringere Menge zugesetzt wird. Ermittelt daraufhin das Meßgerät 23 einen neuen stabilisierten Meßwert der Fällungsreaktion, wird dieser Meßwert At 2 mit dem vorhergehenden Wert At 1 verglichen. Ergibt sich eine Differenz in der Weise, daß At 2 < At 1 ist, gilt dies als Anzeige für eine weiter ablaufende Fällungsreaktion. Daraufhin veranlaßt der Rechner 31 eine erneute Zugabe einer wiederum etwas geringeren Menge des Fällungsmittels (Polyimin) aus dem Vorratsbehälter 17 in den Reaktor 15. Dieser Vorgang wiederholt sich bis zum Zeitpunkt $t_4$. Hier wird die Polyimin-Zugabe gestoppt und anschließend aus dem Vorratsbehälter 17 Stärkelösung in den Reaktor 15 eingegeben, bis $A_n = A_{n-1}$ ist (maximale Rate). Dieser Vorgang ist in Figur 2 dargestellt.

Die Erfindung wird nachfolgend durch Beispiele näher erläutert, wobei darauf hingewiesen wird, daß alle in den Beispielen enthaltenen Merkmale als erfindungswesentlich angesehen werden.

## Beispiel 1

Fällung von Chlorlignin aus Bleichereiabwasser der Chlorierungs- und Extraktionsstufe

Die Fällung wurde bei einem pH-Wert von 4,1 bis 4,3 und bei einer Temperatur von 52° C durchgeführt. Im Überstand der Fällung wurde nach dem Abfiltrieren des Niederschlags die UV-Absorption bei 280 nm gemessen und aus dem Vergleich dieser Messung mit der Messung der Ausgangslösung die Reduktionsrate des Chlorlignins und damit die Reinigungsleistung des Verfahrens in Prozent berechnet. Die Konzentration des Chlorlignins in Bleichereiabwässern der Chlorierungs- und Extraktionsstufe ist direkt proportional der UV-Absorption in diesem Bereich.

Als Fällungsmittel wurden folgende Lösungen verwendet:
a) 2,5 %ige wässrige Polyiminlösung
b) 1 %ige wässrige Lösung einer kationischen Stärke
   aa) Substitutionsgrad 0,04-0,05 (Amijel)
   bb) Substitutionsgrad 0,18 (K 1270-1)

c) 1 %ige wässrige Lösung einer nativen Stärke

Aus der folgenden Tabelle 1 ist ersichtlich, daß die Fällungskapazität von Stärke allein ohne Zusatz weiterer Polykationen, wie sie im Stand der Technik verwendet werden, abhängig ist von der Anzahl der kationischen Gruppen im Molekül: Je höher der Substitutionsgrad ist, um so mehr Chlorlignin wird ausgefällt. Vermutlich bildet das Polykation der Stärke mit dem entgegengesetzt geladenen Polyanionen des Chlorlignins einen wasserunlöslichen Polyelektrolytkomplex, der vergleichbar ist mit anderen Polyelektrolytkomplexen.

Die folgende Tabelle 2 zeigt die Auswirkungen eines Stärkezusatzes auf die Fällung mit Polyimin, die durch die erfindungsgemäße sukzessive Fällung mit Polyimin und danach mit nativer Stärke bewirkt wird. Die Tabelle zeigt, daß native Stärke eine Verbesserung der Fällung um fest 10 Prozentpunkte bewirkt; durch schwach kationisch substituierte Stärke wird die Fällung noch weiter verbessert. Überraschenderweise ist der Fällungseffekt beim kombinierten Einsatz der schwach kationisch substituierten Stärke Amijel mit Polyimin besser als beim kombinierten Einsatz der stärker kationisch substituierten Stärke K-1270-1 mit Polyimin.

Die Tabelle 3 zeigt den Unterschied bei einer gleichzeitigen Fällung mit Polyimin und kationisch substituierter Stärke und bei einer erfindungsgemäßen sukzessiven Fällung.

Tabelle 1

| (Vergleichsversuch) | | |
|---|---|---|
| Fällung von Abwasser der Chlorierungsstufe mit kationischen Stärken mit verschiedenen Substitutionsgraden sowie mit nativer Stärke. 20 ml 1 %ige Lösung auf 1 l Abwasser. | | |
| Stärketyp | Reduktion des Chlorlignins um % | Substitutionsgrad |
| native Stärke leicht löslich | 0 | 0 |
| Amijel | 2 | 0,045 |
| K-1270-1 | 28 | 0,18 |

Tabelle 2

Sukzessive Fällung von Abwasser der Chlorierungsstufe mit Polyimin und danach mit Stärke. Es wurden jeweils 1 ml 2,5 %ige Polyiminlösung und 20 ml einer 1 %igen Lösung des jeweiligen Stärkeprodukts auf 1 l Abwasser eingesetzt.

| Stärketyp | Reduktion des Chlorlignins um % |
|---|---|
| Kontrolle: Polyimin allein | 43 |
| Polyimin - native Stärke | 52 |
| Polyimin - Amijel | 68 |
| Polyimin - K-1270-1 | 49 |

Tabelle 3

| Fällung von Abwasser der Chlorierungsstufe | |
|---|---|
| Vergleich der Fällungskapazität bei Einsatz von Stärke-Polyimin-Gemischen (1) und bei Einsatz von Polyimin und Stärke nacheinander (2): | |
| Fällungsmittel (Mengen wie in Tab. 1) | Reduktion des Chlorlignins um % |
| Polyimin - Stärke (Amijel) - Gemisch | 43 |
| Polyimin - Amijel nacheinander | 68 |

6

Beispiel 2

Im folgenden wird die erste Stufe des Verfahrens anhand eines Beispiels erläutert, welches sich auf ein Bleichereiabwasser der Stufen C und E eines ausländischen Zellstoffherstellers bezieht (C = Chlorierungsstufe, E = Extraktionsstufe). Das Abwasser hatte die folgenden ökologisch bedeutsamen Parameter:

CSB mg/l         2560
A 230 (pH 5,3    19
A 280 (pH 5,3)   14
A 464 = Färbung   0,79
AOX (Gehalt an chlororganischen Verbindungen) mg/l        57
pH      7,2

Zehn Liter dieses Abwassers wurden dem Reaktor 2 zugegeben und dort unter Rühren bei 100 UpM innerhalb von etwa 15 Minuten auf die gewünschte Temperatur von 50° C gebracht. Der pH-Wert dieser Lösung wurde mit dem oben beschriebenen Meß- und Regelsystem auf einen Wert von pH = 5,2 eingestellt, wobei 15 ml einer 1 n Schwefelsäure benötigt wurden. Nach Erreichen des eingestellten Soll-Wertes wurde die Lösung in den Reaktor 15 überführt und dort wieder mit 100 UpM gerührt, während der vorherige Reaktorbehälter 2 erneut mit Abwasser gefüllt und dieses für die Weiterbehandlung vorbereitet wurde. Die optische Dichte wurde zunächst gemessen (A 280), indem in dem Nebenkreislauf 21 die Lösung mit einer Durchlaufgeschwindigkeit von ca. 100 ml/min. durch das Photometer 23 gepumpt wurde.

Dann wurde das Fällungsmittel Polyimin mit konstanter Durchflußrate, nämlich 10 - 20 ml pro Minute, zugegeben und die Reaktionsmischung mit konstanter Geschwindigkeit bei etwa 200 UpM gerührt. Sofort nach Zugabe des Polyimins bildete sich der Chlorlignin-Polyimin-Komplex in Form von Mikroflocken, die zur Trübung der Lösung und somit zu einem Anstieg der optischen Dichte führte ($t_0$ bis $t_3$, Fig. 2).

Nach Erreichen des Absorptionsmaximums $A_3$ fällt die Absorptionskurve steil nach unten ab, weil die Zugabe geringer Mengen weiteren Polyimins zur Koagulation der Mikroflocken zu Makroflocken führte. Dieses hat eine teilweise Klärung der Lösung und somit einen Abfall der optischen Dichte zur Folge.


Beispiel 3: 2. Stufe

Zum Zeitpunkt $t_4$ wird die Zugabe von Polyimin gestoppt und aus dem Vorratsgefäß 17 Stärkelösung wie in Beispiel 1 zugegeben, bis $A_n = A_{n-1}$ ist, d. H. daß $\frac{dA}{dt}$ gegen 0 geht (maximale Rate).

Der gesamte Verlauf der Fällung ist in Fig. 2 dargestellt. Geht $\frac{dA}{dt}$ gegen 0, so wird auch die Zugabe der Stärke gestoppt.


**Ansprüche**

1. Verfahren zur Fällung von anionischen Verunreinigungen aus Abwässern unter Verwendung von synthetischen kationischen Polymeren,
**dadurch gekennzeichnet, daß**
die Abwässer zunächst teilweise mit synthetischen kationischen Polymeren behandelt werden und dem so behandelten Abwasser anschließend native, hydrolysierte oder kationisch substituierte Produkte von Stärken oder Hemicellulosen zugesetzt werden.

2. Verfahren nach Anspruch 1, dadurch gekennzeichnet, daß halogenierte bzw. sulfonierte organische Verbindungen aus dem Abwasser ausgefällt werden.

3. Verfahren nach Anspruch 1, dadurch gekennzeichnet, daß als synthetisches kationisches Polymeres Polyimin eingesetzt wird.

4. Verfahren nach Anspruch 1, dadurch gekennzeichnet, daß die Behandlung bei einem pH-Wert von etwa 2,5 bis 8,5 durchgeführt wird.

5. Verfahren ach Anspruch 1, dadurch gekennzeichnet, daß die Behandlung bei einem pH-Wert von etwa 3,5 bis 5,5 durchgeführt wird.

6. Verfahren nach Anspruch 1, dadurch gekennzeichnet, daß die Behandlung bei einem pH-Wert von etwa 4,0 bis 4,5 durchgeführt wird.

7. Verfahren nach Anspruch 1, dadurch gekennzeichnet, daß native Stärke verwendet wird.

8. Verfahren nach Anspruch 1, dadurch gekennzeichnet, daß kationisch substituierte Stärke eingesetzt wird.

9. Verfahren nach Anspruch 1, dadurch gekennzeichnet, daß die Fällung mit synthetischen kationischen Polymeren abgebrochen wird, wenn etwa die Hälfte bis ein Drittel der auszufällenden Substanzen entfernt worden ist.

10. Verfahren nach Anspruch 1, dadurch gekennzeichnet, daß die Einstellung des pH-Wertes und der Zusatz an Fällungsmittel durch einen Prozeßrechner (31) gesteuert wird, wobei die Effektivität der Fällung gemessen und der ermittelte Meßwert in den Rechner (31) eingegeben wird.

11. Verfahren nach Anspruch 10, dadurch gekennzeichnet, daß der Meßwert in einem mit dem Fällungsreaktor (15) verbundenen Nebenkreislauf (21) ermittelt wird.

12. Verfahren nach Anspruch 10, dadurch gekennzeichnet, daß die Effektivität der Fällung durch Messung der optischen Absorption im UV- oder sichtbaren Bereich, der Leitfähigkeit, der Trübung, der Teilchengröße oder des Zeta-Potentials bestimmt wird.

13. Verfahren nach Anspruch 12, dadurch gekennzeichnet, daß die Messung mit UV-Licht erfolgt.

14. Verfahren nach Anspruch 10, dadurch gekennzeichnet, daß auch der Zufluß des Abwassers in den Fällungsreaktor (15) und der Ablauf aus diesem nach erfolgter Ausfällung in ein Absetzgefäß (27) durch den Rechner (31) gesteuert wird.

15. Verfahren nach Anspruch 10, dadurch gekennzeichnet, daß die Reaktionslösung nach Beendigung der Fällungsmittelzugabe eine kurze Zeit von ca. 2 bis 3 Minuten in dem Reaktor (15) belassen wird.

16. Vorrichtung zur Durchführung des Verfahrens nach wenigstens einem der Ansprüche 1 bis 15, dadurch gekennzeichnet, daß der Reaktor (15) mit einem pH-Meter (23) und mit einem Nebenkreislauf (21, 24) verbunden ist, der eine Vorrichtung (23) zur Messung der Effektivität der Fällung aufweist, und daß beide Meßvorrichtungen mit einem Rechner (31) gekoppelt sind, der seinerseits mit Absperrorganen (10, 18, 26) für die pH-Reagenzien und das Fällungsmittel sowie in der Verbindungsleitung (26) zwischen dem Reaktor (15) und einem Absetzgefäß (27) gekoppelt ist.

17. Vorrichtung nach Anspruch 16, dadurch gekennzeichnet, daß zwei thermostatisierte Reaktoren (2, 15) hintereinander angeordnet sind, von denen der eine (2) der pH-Wert- und Temperatur-Einstellung und der andere (15) der Fällungsreaktion dient.

18. Anwendung des Verfahrens nach den Ansprüchen 1 bis 15 für die Reinigung von Abwässern der Zellstoff- und Papierindustrie.

FIG. 1

Fig. 2

Europäisches
Patentamt

# EUROPÄISCHER RECHERCHENBERICHT

Nummer der Anmeldung

## EINSCHLÄGIGE DOKUMENTE

EP 88115227.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 026 187 (NICHIREKI CHEMICAL INDUSTRY) <br><br> * Anspruch 1; Seite 3, Zeilen 1-6; Seite 7, Zeilen 2-12; Seite 11, Zeile 17 - Seite 14, Zeile 12 * | 1,3,7 | C 02 F 1/56 <br> C 02 F 1/58 |
| A | US - A - 3 947 354 (SWANSON et al.) <br><br> * Ansprüche 1,2 * | 1,3 | |
| A | WO - A1 - 85/04 857 (SANYO CHEMICAL INDUSTRIES) <br><br> * Anspruch 5 * | 1,3 | |
| P,A | & US-A-4 710 298 | | |
| A | US - A - 4 678 585 (BROWNRIGG) <br><br> * Anspruch 1 * | 1 | RECHERCHIERTE SACHGEBIETE (Int. Cl.4) |
| A | EP - A1 - 0 193 518 (LUKENEDER) <br><br> * Zusammenfassung * | 1,16 | C 02 F <br> B 01 J |

Der vorliegende Recherchenbericht wurde für alle Patentansprüche erstellt.

| Recherchenort | Abschlußdatum der Recherche | Prüfer |
|---|---|---|
| WIEN | 22-12-1988 | WILFINGER |